# EUROPEAN PATENT APPLICATION

(11) **EP 2 072 541 A2**
(43) Date of publication of application: **24.06.2009**
(21) Application number: 09156311.4
(22) Date of filing: 18.12.2006
(51) Int. Cl.: C08F 6/28, C08F 6/10, C08L 33/00, C08F 220/10

(54) **Process for removing residual volatile monomers from a polymer in powder form**

(30) Priority: 20.12.2005 GB 0525864
(62) Divisional of application: 06829700.1
(71) Applicant: Novartis AG, 4056 Basel (CH)
(72) Inventor: Muhrer, Gerhard, 4053, Basel (CH); Winzenburg, Gesine, 79594, Inzlingen (DE)
(74) Representative: Lehmeier, Thomas Jürgen

(57) **Abstract**

A process for purifying a polymer in powder form containing residual volatile monomers.

## Description

The present invention relates to a process for purifying polymeric excipients e.g. copolymers containing volatile monomers, by vacuum drying, by spray drying, or by supercritical fluid drying.

Polymeric excipients e.g. copolymers may be used in pharmaceutical compositions. For example, ammonio methacrylate copolymer type B known under the trade name Eudragit RS is most commonly used as a sustained release coating agent in oral solid dosage forms. The same polymeric excipient may be used in other pharmaceutical compositions and dosage forms, e.g. for dermal or topical pharmaceutical compositions. The copolymer Eudragit RS [poly(ethyl propenoate-co-methyl 2-methylpropenoate-co-2-(trimethylammonio) ethyl 2-methylpropenoate) chloride] is produced by co-polymerization of ethyl propenoate (ethyl acrylate), methyl 2-methylpropenoate (methyl methacrylate) and 2-(trimethylammonio) ethyl 2-methylpropenoate. These copolymers are mixtures of acrylic and methacrylic acid esters with a low content in quaternary ammonium groups. More precisely, the ratio of ethyl propenoate groups to 2-methylpropenoate groups to 2-(trimethylammonio) ethyl 2-methylpropenoate groups in the copolymer is about 1:2:0.1, and the content of ammonio methacrylate groups typically lies between about 4.5 and 7 per cent on dry substance. Eudragit RS is commercialized in pellet and powder form known and registered under the trade names Eudragit RS 100 and Eudragit RS PO; respectively. Commercially available Eudragit RS copolymer contains residual amounts of monomers, namely maximally 100 ppm of ethyl acrylate and 50 ppm of methyl methacrylate according to the Ph. Eur. or USP/NF monographs. Both ethyl acrylate and methyl methacrylate are known as skin sensitizers. Polymeric excipients containing volatile monomers with skin sensitizing properties are a problem for pharmaceutical compositions, and particularly for topical pharmaceutical compositions. Hence, there is a need to develop purification processes which reduce the volatile monomer content in pharmaceutical polymers, such as e.g. ammonio methacrylate copolymer type B, e.g. as known and commercially available under the trade name Eudragit RS.

Removal of residual monomers is a well known problem in the polymer industry. Polymers used for pharmaceutical applications have been purified by precipitation, kneading in an anti-solvent or by size exclusion methods e.g. by dialysis. Nonetheless, achieving residual volatile monomer contents in the low ppm range or even below 1 ppm remains a challenge to the present day. For example, simply subjecting Eudragit RS 100 pellets to a vacuum treatment at 70° C and 20 mbar for as long as one week does not significantly reduce the amount of ethyl acrylate and methyl methacrylate monomers in the copolymer.

The present invention provides improved processes for purifying copolymers containing residual volatile monomers in which the residual volatile monomer content is significantly reduced to residual amounts of less than 1 ppm. In the case of ammonio methacrylate copolymer type B in particular, the residual amounts of ethyl acrylate and methyl methacrylate in the copolymer may be reduced to less than 1 ppm.

In one aspect the present invention provides processing options for purifying copolymers in powder form containing residual volatile monomers by drying the polymers under vacuum, at a pressure below about 100 mbar, preferably below 20 mbar, and more preferably below 10 mbar, and at a temperature high enough to allow for the vaporization of the residual monomers at the processing conditions. In the case of ammonio methacrylate copolymer type B in particular, the temperature may typically be between 50° C and 80° C. Optionally after the drying process, loose aggregates may be disintegrated and de-aggregated by sieving.

In another aspect the invention provides a process for purifying copolymers by dissolving the polymer in a suitable solvent and removing the residual volatile monomers in the polymer by subsequent spray drying.

In a further aspect the invention provides a process for purifying copolymers by drying the polymers using compressed carbon dioxide.

The advantage of the processes of the present invention for purifying polymers for pharmaceutical applications is that residual monomer contents may be reduced to less than 1 ppm. By reducing the amount of monomers in the polymer, the skin sensitization potential, e.g. of a topical pharmaceutical formulation, can be decreased significantly.

The advantage of the process for purifying e.g. ammonio methacrylate type B polymer in powder form in an oven under vacuum at a temperature of around 70° C is that there is no sintering of the copolymer although the glass transition temperature of ammonio methacrylate type B powder lies below 60° C.

The advantage of the process for purifying copolymers by spray drying is that not only polymers in powder form containing residual volatile monomers may be purified, but also polymers in other solid product forms such as e.g. pellets may be purified. Moreover, by dissolving the polymer in a suitable solvent and removing the residual volatile monomers in the polymer by subsequent spray drying reduces the treatment time to typically less than five days.

The advantage of the process for purifying polymers by compressed CO₂ is that the amounts of monomers may be reduced to less than 1 ppm in less than 5 days.

Polymers according to the invention include mixtures of acrylic and methacrylic acid esters with a low content in quaternary ammonium groups as known under the trade names Eudragit RS 100 (poly(ethyl acrylate, methyl methacrylate, trimethylammonioethyl methacrylate chloride)) 1:2:0.1 (CAS no. 33434-1) and Eudragit RS PO (poly(ethyl acrylate, methyl methacrylate, trimethylammonioethyl methacrylate chloride)) 1:2:0.1 (CAS no. 33434-1), RL 100 (poly(ethyl acrylate, methyl methacrylate, triammonioethyl methacrylate chloride)) 1:2:0.2 (CAS no. 26936-24-3), and Eudragit RL PO (poly(ethyl acrylate, methyl methacrylate, triammonioethyl methacrylate chloride)) 1:2:0.2 (CAS no. 26936-24-3) (Fiedler's Lexikon der Hilfstoffe, 5^{th} edition, ECV Aulendorf, loc.cit., p. 689). Further polymers according to the invention include cationic copolymers based on dimethylaminoethyl methacrylate and neutral methacrylic esters known under the trade names EUDRAGIT E 100 (poly(butyl methacrylate, (2-dimethylaminoethyl) methacrylate, methyl methacrylate)) 1:2:1 (CAS no. 24938-16-7) or Eudragit E PO (poly(butyl methacrylate, (2-dimethylaminoethyl) methacrylate, methyl methacrylate)) 1:2:1 (CAS no. 24938-16-7), anionic copolymers based on methacrylic acid and methyl methacrylate known under the trade names Eudragit L 100 (poly(methacrylic acid, methyl methacrylate)) 1:1 (CAS no. 25806-15-1), Eudragit S 100 (poly(methacrylic acid, methyl methacrylate)) 1:2 or Eudragit L 100-55 (poly(methacrylic acid, ethyl acrylate)) 1:1 (CAS no. 25212-88-8).

Copolymers in powder form may be purified by drying under vacuum, by dissolution in a suitable solvent and subsequent spray drying of said solution, or by drying in compressed carbon dioxide. Copolymers in solid form may preferentially be purified by dissolution in a suitable solvent and subsequent spray drying of said solution.

Monomers that are removed by the processes of the invention include but are not limited to ethyl propenoate (ethyl acrylate), methyl 2-methyl propenoate (methyl methacrylate), n-propyl propenoate (n-propyl methacrylate) and n-butyl propenoate (n-butyl methacrylate).

The process for purifying polymers of the present invention may be effected by drying polymers in powder form in a standard laboratory scale drying oven and under vacuum, i.e., at a pressure preferably below about 100 mbar, more preferably below 20 mbar, most preferably below 10 mbar, and at a temperature high enough to allow for the vaporization of the residual monomers at the given processing conditions. In the case of ammonio methacrylate copolymer type B in particular, the temperature may preferably be between about 50° C and 80° C, more preferably between about 60° C to 70° C, and most preferably at about 70°C for 4 to 8 days, preferably for 5 to 7 days, and most preferably for 6 days under vacuum.

In another aspect the process for purifying polymers in powder form may be effected by using a paddle dryer under vacuum at a pressure preferably below about 100 mbar, more preferably below 20 mbar, and most preferably below 10 mbar, and at a temperature high enough to allow for the vaporization of the residual monomers at the given processing conditions. In the case of ammonio methacrylate copolymer type B in particular, the temperature may preferably be between about 50° C and 80° C, more preferably between about 55° C to 75° C, and most preferably between about 60°C and 70°C for 2 to 8 days, and preferably for 2 to 5 days. In paddle driers, the polymer powder may additionally be rotated, which may accelerate the purification process and avoid or significantly reduce powder aggregation.

In another aspect of the invention the process for purifying copolymers may be effected by dissolving the polymer in a suitable solvent and subsequent spray drying of said solution.

As used herein the term "solvent" refers to a material that is able to substantially dissolve, disperse and/or solubilize the polymeric compound of interest. As used herein the term substantially is meant to comprise a solubility of greater than 0.1 percent weight per volume. A solvent may consist of a single material or a mixture of materials. Modifiers or co-solvents to enhance the dissolution, dispersion and/or solubilization of the polymeric compound may be added to the solvent. Examples of classes of solvents include, but are not limited to, alcohols, ethers, ketones, esters, alkanes, halides or mixtures thereof. Examples of solvents include, but are not limited to water, ammonia, dimethyl sulfoxide, methanol, ethanol, isopropanol, n-propanol, methylene chloride, acetone, ethyl acetate, tetrahydrofurane, ethyl ether or mixtures thereof. In the case of ammonio methacrylate copolymer type B in either pellet or powder form in particular, the copolymer powder may be dissolved in methanol. After dissolving the copolymer the solution may be spray dried, e.g. using a Büchi model 290 laboratory scale spray drier. The inlet temperature may be between about 110° C and 130° C and the outlet temperature may be between about 55°C and 70° C. The volatile monomers are reduced to less than 0.1 ppm ethyl acrylate and less than 0.1 ppm methyl methacrylate.

In a further aspect of the invention the process of purifying copolymers may be effected by drying copolymers in powder form by compressed CO₂. The operating pressure may range from about 30 to about 300 bar, preferably the operating pressure may be about 100 bar. The process temperature may range from about 25° C to 70°C, preferably the temperature is about 40° C. The process may be performed by loading a known amount, e.g. 30 grams, of polymer into a pressure vessel, pressurizing the vessel, and continuously flushing compressed carbon dioxide through the system while maintaining the pressure constant. In the case of ammonio methacrylate copolymer type B, about 200 g of Eudragit RS PO may be loaded into a 1-liter pressure vessel, the vessel may be pressurized to a pressure of between about 30 and 150 bar and the temperature may be controlled between about 25 and 70°C. Between about 4 and 25 kg of carbon dioxide may then be flushed through the system at a flow rate of between about 10 to 100 g/min. The process may last between about less than 1 hour up to 48 hours.

### Example 1

200 g of Eudragit RS PO, purchased from Roehm and containing 12 ppm of ethyl acrylate and 7 ppm of methyl methacrylate are placed in a drying oven. The product is dried for 6 days at 70° C and below 10 mbar. The recovered Eudragit contains less than 1 ppm of ethyl acrylate and less than 1 ppm of methyl methacrylate.

### Example 2

20 kg of Eudragit RS PO containing 6.3 ppm ethyl acrylate and 2.9 ppm methyl methacrylate are placed in a tray dryer at 70° C for 7 days and below 50 mbar. After this procedure the product is sieved. The recovered Eudragit contains 0.2 ppm of ethyl acrylate and less than 0.1 ppm of methyl methacrylate.

### Example 3

200 grams of Eudragit RS PO containing 16 ppm ethyl acrylate and 8 ppm methyl methacrylate are placed into a 1-liter pressure vessel. The vessel is then pressurized to 100 bar and temperature is controlled at 40°C. Compressed CO₂ is then continuously flushed through the vessel at a rate of 100 g/min until a total of 6 kg of CO₂ are consumed, thereby removing the residual volatile monomer content in the polymer. After this procedure the recovered Eudragit contains about 2.0 ppm of ethyl acrylate and 0.9 ppm of methyl methacrylate.

### Example 4

200 grams of Eudragit RS PO containing 16 ppm ethyl acrylate and 8 ppm methyl methacrylate is placed into a 1-liter pressure vessel. The vessel is then pressurized to 30 bar and temperature was controlled at 40°C. Compressed CO₂ is then continuously flushed through the vessel at a rate of 100 g/min until a total of 10 kg of CO₂ are consumed, thereby removing the residual volatile monomer content in the polymer. After this procedure the recovered Eudragit contains about 2.5 ppm of ethyl acrylate and 1.1 ppm of methyl methacrylate.

### Example 5

About 40 grams of Eudragit RS PO containing 12.5 ppm ethyl acrylate and 6.7 ppm methyl methacrylate is dissolved in methanol to give a total amount of solution of about 390 grams, and said solution is subsequently processed in a Büchi model 290 laboratory scale spray drier, thereby evaporating the solvent and the volatile monomers, and transforming the polymer into solid particles. The inlet temperature of the spray tower is about 120°C, while the outlet temperature is between about 55° C and 65°C. The nitrogen flow rate in the spray drier is about 600 l/h, and the process yield is about 55%. After this procedure the recovered Eudragit contains less than 0.1 ppm of ethyl acrylate and less than 0.1 ppm of methyl methacrylate.

### Example 6

About 2.5 kg of Eudragit RS PO containing 12.5 ppm ethyl acrylate and 6.7 ppm methyl methacrylate are placed into a 10-liter paddle dryer rotating at 10 Rpm. The operating pressure is about 10 mbar and the temperature is controlled at 60° C. This procedure is carried out for a total of 165 hours. After 24 hours, the recovered Eudragit contains 1.4 ppm ethyl acrylate and 0.6 ppm methyl methacrylate. After 48 hours, the recovered Eudragit contains 0.6 ppm ethyl acrylate and 0.2 ppm methyl methacrylate. After 125 up to 165 hours the recovered Eudragit contains less than 0.1 ppm ethyl acrylate and less than 0.1 ppm methyl methacrylate.

## Claims

1. A process for purifying a polymer in powder or pellet form containing residual volatile monomers by dissolving it in a suitable solvent and spray drying said solution to vaporize the solvent and the volatile monomers, and transform the polymer into solid particles.

2. The process according to claim 1 wherein the polymer is (poly (ethyl acrylate, methyl methacrylate, trimethylammonio ethyl methacrylate chloride)), (poly(ethyl acrylate, methyl methacrylate, triammonioethyl methacrylate chloride)), (poly(butyl methacrylate, (2-dimethylaminoethyl) methacrylate, methyl methacrylate)), (poly(methacrylic acid, methyl methacrylate)), (poly(methacrylic acid, methyl methacrylate)) or (poly(methacrylic acid, ethyl acrylate)).

3. The process according to claim 1 or 2 wherein the solvent is methanol, the spray tower inlet temperature is between 110° C and 130° C and the outlet temperature is between 55° C and 65° C.

4. A process for purifying a polymer in powder form by drying it with compressed carbon dioxide CO₂ at pressures between 30 and 300 bar.

5. A process according to claim 3 wherein the polymer is dried under pressure at 100 bar.

6. A process according to claim 3 wherein the copolymers are dried at 25° C to 50° C.

7. A process for purifying a polymer in powder form containing residual volatile monomers by drying the polymer powder under vacuum at a pressure below about 100 mbar, at a temperature which allows the vaporization of the residual monomers and optionally de-aggregating by sieving.

8. The process according to claim 7 wherein the polymer is (poly (ethyl acrylate, methyl methacrylate, trimethylammonioethyl methacrylate chloride))

9. The process according to claim 7 wherein the polymer is (poly(ethyl acrylate, methyl methacrylate, triammonioethyl methacrylate chloride)), (poly(butyl methacrylate, (2-dimethylaminoethyl) methacrylate, methyl methacrylate)),

10. The process according to claim 7 or 8 wherein the pressure is between 10 mbar to 20 mbar.

11. The process according to any of claims 7 to 10 wherein the drying temperature is 55° C to 75° C.

12. The process according to claim 10 wherein the vacuum is below 10 mbar.

13. The process according to any to any of claims 7 to 12 wherein the drying process is applied for 1 to 8 days.

14. The process according to any to any of claims 7 to 13 wherein a paddle dryer is used to dry the polymer.

15. The process according to any of claims 7 to 14 reducing the amount of ethyl acrylate to less than 1 ppm and the amount of methyl methacrylate to less than 1 ppm.

16. Use of the polymer purified by the process of any preceding claim for topical formulations.
